Europäisches Patentamt

European Patent Office

Office européen des brevets

(19)

(11) Veröffentlichungsnummer : **0 315 136 B1**

(12) **EUROPÄISCHE PATENTSCHRIFT**

(45) Veröffentlichungstag der Patentschrift :
14.08.91 Patentblatt 91/33

(51) Int. Cl.$^5$ : **F16C 3/10**

(21) Anmeldenummer : **88118228.1**

(22) Anmeldetag : **02.11.88**

(54) Verfahren zur Herstellung von aufgebauten Kurbelwellen durch Aufweiten von in geteilten Zapfen angeordneten Hülsen.

(30) Priorität : 05.11.87 DE 3737600

(43) Veröffentlichungstag der Anmeldung :
10.05.89 Patentblatt 89/19

(45) Bekanntmachung des Hinweises auf die
Patenterteilung :
14.08.91 Patentblatt 91/33

(84) Benannte Vertragsstaaten :
BE CH DE ES FR GB IT LI NL SE

(56) Entgegenhaltungen :
DE-C- 711 938
DE-C- 3 611 108
FR-A- 834 771
FR-A- 2 491 133
FR-A- 2 534 855
GB-A- 551 901
US-A- 3 388 616
US-A- 4 007 699
US-A- 4 125 937
US-A- 4 622 864

(73) Patentinhaber : Emitec Gesellschaft für
Emissionstechnologie mbH
Hauptstrasse 150
W-5204 Lohmar 1 (DE)

(72) Erfinder : Swars, Helmut
Riedweg 11
W-5060 Bergisch Gladbach 1 (DE)
Erfinder : Maus, Wolfgang
Gut Horst
W-5060 Bergisch Gladbach 1 (DE)

(74) Vertreter : Neumann, Ernst Dieter, Dipl.-Ing. et
al
HARWARDT NEUMANN PATENTANWÄLTE
Scheerengasse 2 Postfach 1455
W-5200 Siegburg (DE)

## Beschreibung

Die vorliegende Erfindung betrifft ein Verfahren zur Herstellung von Kurbelwellen für Kolbenmaschinen aus Formstücken, die jeweils eine Kurbelwange und einen Teil des Zapfens umfassen, bei dem die Zapfenteile jeweils benachbarter Formstücke auf eine gemeinsame Hülse geschoben werden und die Hülsen so aufgeweitet werden, daß die Zapfenteile dadurch radial elastisch verformt bleiben. Kurbelwellen für kleinere Kolbenmaschinen, insbesondere Otto- und Diesel-Motoren werden oft in Kokillen gegossen oder im Gesenk geschmiedet einstückig hergestellt. Die Lagerzapfen werden anschließend mechanisch bearbeitet und schließlich gehärtet ; dadurch, daß diese Arbeiten an dem ansonsten fertigen Werkstück ausgeführt werden müssen, sind sie verhältnismäßig aufwendig. Kurbelwellen für größere Motoren werden dagegen aus Einzelteilen aufgebaut, wie sie unter Berücksichtigung der fertigungstechnischen Möglichkeiten zur Verfügung stehen ; typische Lösungen zeigen die DE-B-1625579, wo die Trennungslinie zwischen den Einzelteilen durch die Wangen verläuft, und die DE-B-2023364, wo die Zapfen geteilt sind. Durchweg werden die Einzelteile durch Schweißen miteinander verbunden ; dies gilt selbst dann, wenn die Kurbelwelle gemäß der DE-C-498170 aus aneinandergesetzten Blechpreßlingen aufgebaut werden soll. Dem Fachmann ist durch die DE-C 848728 auch bekannt, daß die Kurbelwelle zur Gewichtsersparnis hohl ausgeführt werden kann und für Zapfen und Wangen jeweils unterschiedliche Werkstoffe genommen werden können, deren jeder den spezifischen, unterschiedlichen Belastungen besser gewachsen ist, denen diese Bauteile ausgesetzt sind. Aus der DE-A-1922488 ist der Einsatz einer der Verbesserung der Haftung zwischen den durch Elektronenstrahlschweißen miteinander verbundenen Einzelteilen dienenden Zwischenschicht bekannt. Die DE-A-1951097 zeigt, daß vor dem Zusammenbau der Einzelteile auf eines derselben, nämlich den Kurbelzapfen, ein fertiges Antriebselement, z.B. ein Zahnrad aufgeschoben und befestigt werden kann. Der gleichen Schrift kann der Fachmann auch den Vorschlag entnehmen, die Einzelteile an den Trennflächen so auszubilden, daß sie vor dem Verschweißen ineinandergeschoben werden können, um eine Montagehilfe zu bieten.

Zur Verbindung der Kurbelwelle mit dem Kolben werden durchweg geteilte Pleuel verwendet, die gleichfalls verhältnismäßig aufwendig in der Herstellung sind und besondere Aufmerksamkeit bei der Montage erfordern, um einen einwandfreien Rundlauf der Zapfen zu gewährleisten ; dies besonders, wenn statt der vielfach verwendeten Gleitlager an dieser Stelle Wälzlager eingesetzt werden sollen. Das Befestigen von Rohren in Bohrungen anderer Teile durch Aufweiten ersterer ist aus dem Wärmetauscherbau bekannt, wobei sowohl mechanische als auch hydraulische Aufweitvorrichtungen Verwendung finden. Eine derartige Vorrichtung ist aus der US-A-4125937 bekannt.

In einer zeitgleich hiermit eingereichten deutschen Patentanmeldung (DE 3737601.2 & EP-A-88118229.9, beschreibt die Anmelderein ein Verfahren zur Herstellung von aufgebauten Kurbelwellen aus einzeln hergestellten und anschließend gefügten Wangen und Zapfen, bei dem die als Hohlzylinder ausgeführten Zapfen durch Aufweiten plastisch verformt und in den entsprechenden Bohrungen der Wangen zur Anlage gebracht, wobei letztere elastisch verformt werden. Dieses Verfahren eignet sich für solche Kurbelwellen, bei denen die Kurbel- und Lagerzapfen einander in der axialen Projektion nicht überdecken. Bei derartigen Kurbelwellen treten, auch wenn sie einstückig gefertigt sind, auf die Festigkeit ungünstig wirkende Belastungen auf, weshalb in jüngerer Zeit vielfach sogenannten Kurzhubmotoren der Vorzug gegeben wird, bei denen die Kurbelwangen so verkürzt und die Kurbel- bzw. Lagerzapfen notfalls im Durchmesser so vergrößert sind, daß letztere in der axialen Projektion einander teilweise überdecken. Die vorliegende Erfindung eignet sich zur Herstellung von Kurbelwellen der letztgenannten Art.

Aus der FR-A-2491133 ist ein Verfahren bekannt, bei dem zum Verbinden von zwei mit hohlen Grundzapfen versehenen Kurbelwellen in die aneinanderstoßenden Endzapfen außen formschlüssige Hülsen eingeschoben werden, die eine Innenöffnung mit konischen Endbereichen aufweisen können in die verspannbare Konen zum radialen Aufweiten der Hülse eingesetzt werden. Es ist hiermit die drehfeste und winkelgerechte Verbindung zweier vollständiger Kurbelwellen offenbart.

Aufgabe der vorliegenden Erfindung ist ein kostengünstiges Verfahren zur Herstellung von aufgebauten Kurbelwellen, bei denen für die einzelnen Teile Werkstoffe gewählt werden können, die den zu erwartenden unterschiedlichen, spezifischen Belastungen besonders angepaßt sind, vorzuschlagen. Die Einzelteile sollen dabei vor dem Fügen fertig bearbeitet sein, so daß bis auf ein Richten und Feinwuchten keine Nachbearbeitung erforderlich ist. Die mittels des erfindungsgemäßen Verfahrens hergestellten Kurbelwellen sollen mit einfacher anzubringenden Schmierkanälen versehen sein und ggf. auch gute Notlaufeigenschaften aufweisen. Durch den mit der Herstellung gleichzeitig einhergehenden Einbau von Antriebselementen, wie Lagern und Pleueln sollen diese zugleich vereinfacht und in ihren Laufeigenschaften verbessert werden.

Die Lösung dieser Aufgabe erfolgt dadurch, daß die Hülsen durch plastische radiale Verformung mittels innerer Druckaufgabe zum Anliegen an die Innenseite der Zapfenteile gelangen und darüberhinaus aufgeweitet werden, worauf nach Druckentlastung die Zapfenteile nach einem elastischen Rückfedern eine feste Verbindung mit den Hülsen schaffen. Dadurch, daß die die Kurbelwelle bildenden Einzelteile jeweils eine Kurbelwange (die bei sehr großen Motoren ihrerseits aus Einzelteilen aufgebaut sein kann) und einen Teil eines Zapfens umfassen, können letztere über eine Hülse zusammengefügt werden, auch dann, wenn die Zapfen in der axialen Projektion einander teilweise überdecken. Durch die elastische Verformung der Zapfenteile federn diese nach beendetem Aufweitvorgang auf die Hülsen zurück, wodurch eine Verbindung geschaffen wird, die auch den hohen zu übertragenden Momenten standhält.

Werden Formstücke verwendet, die in den Wangen Öffnungen mit einem Durchmesser aufweisen, der dem Innendurchmesser der Hülsen mindestens gleich ist, so kann der Aufweitvorgang mittels einer axial in die Hülsen eingeführten hydraulischen Aufweitsonde erfolgen, wie sie bereits zur Befestigung von Wärmetauscherrohren in ihren Rohrböden Verwendung finden. Sollen mit Rücksicht auf die unterschiedlichen Belastungen für die Kurbelwangen und die Ansätze der Zapfen andere Werkstoffe verwendet werden als für den Mittelteil der letzteren, empfiehlt es sich, zwischen den an den Wangen aufgesetzten Zapfenteilen eingesetzte zusätzliche Zapfenteile zu verwenden. Zur Vereinfachung wird vorgeschlagen, daß die zusätzlichen Zapfenteile mit den der Verbindung dienenden Hülsen einstückig ausgeführt sind ; dadurch kann, wie in der Zeichnungsbeschreibung näher ausgeführt, eine Umklammerung der Zapfenansätze und damit eine großflächigere Verbindung zwischen beiden Teilen erreicht werden.

Dadurch, daß die zusätzlichen Zapfenteile andere Werkstoffeigenschaften aufweisen als der übrige Teil der Hülsen, kann eine weitere Optimierung der Werkstoffeigenschaften der einzelnen Bereiche der Kurbelwelle vorgenommen werden, wobei die Kurbelwelle z.B. eine verbesserte Schmierung aufweist, durch eine besondere aus einem eventuell mit einem Festschmierstoff imprägnierten Sintermaterial hergestellten Lagerbuchse. Eine solche Lagerbuchse kann, wenn sie bereits Teil der Hülse ist, besonders gut in die Kurbelwellenkonstruktion einbezogen werden.

Dadurch, daß die Lagerzapfenteile auf eine durchgehende, allen gemeinsame Hülse geschoben werden und diese nach dem Befestigen der Formstücke auf ihr in einem Bereich "d", der für die Pleuelstangen freizuhalten ist, abgetrennt wird, wird eine einwandfreie Ausrichtung der Lagerzapfen untereinander bewirkt. Darüber hinaus kann der Aufweitvorgang für die Lagerzapfen und miteinander fluchtende Kurbelzapfen in einem Arbeitsgang abgeschlossen werden, ähnlich wie es die Anmelderin bereits in der EP-A-0213529 zum Befestigen von Antriebselementen wie Nocken, Zahnrädern oder Lagerschalen auf einer Hohlwelle vorgeschlagen hat.

Da eine Wechselwirkung zwischen der Wandstärke der Hülse und derjenigen des Zapfens bzw. der anschließenden Wange besteht, in dem Sinne, daß die durch letztere bedingte größere Dicke des elastisch aufzuweitenden Materials eine Reduzierung des plastisch aufzuweitenden Teiles bedingt, wird vorgeschlagen, daß Hülsen mit zu ihren Enden sich verjüngendem Querschnitt verwendet werden. Durch eine axial unterschiedliche Druckaufgabe kann ebenfalls dieser Wechselwirkung Rechnung getragen werden, so daß auch hier eine gleichmäßige Haftung zwischen den zu fügenden Teilen erreicht wird.

Eine besondere Formgebung der Zapfenteile und Hülsen schafft die Möglichkeit alle Lagerstellen der Kurbelwelle gleichzeitig mit Schmierstoff zu versorgen ; bei den nach dem Stande der Technik hergestellten Kurbelwellen muß ein Teil der Schmierstoffkanäle nachträglich eingebracht werden, was nur unter Schwierigkeiten und mit erhöhtem Fertigungsaufwand möglich ist.

Die Verwendung aufgeschobener Lagerbuchsen ermöglicht es, für die Lagerflächen in den tribologischen Eigenschaften besonders geeignetes Material zu verwenden. Dabei kann es sich, wie bereits oben ausgeführt, um ein mit einem Festschmierstoff imprägniertes Sintermaterial handeln, das sowohl eine gleichmäßige Zufuhr des Schmierstoffs über die Lagerfläche als auch gute Notlaufeigenschaften gewährleistet.

Damit die Lagerbuchsen bereits in fertig bearbeitetem Zustand auf die Zapfen aufgesetzt werden können, werden nur diejenigen Teile derselben in den Aufweitprozeß einbezogen, die außerhalb der eigentlichen Lagerfläche liegen. Hierzu können sie beispielsweise außerhalb der Lagerflächen mit Bunden versehen sein oder je nach deren Anordnung an ihren Enden verjüngt sein.

Nach bevorzugter Ausgestaltung können bereits vor dem Fügen ungeteilte Wälzlager auf die Zapfen oder Lagerbuchsen aufgebracht werden. Da das Fügen ohne Wärmeeinwirkung und ohne die auch bei fortschrittlichen Schweißverfahren nicht ganz zu beseitigende Gefahr des Auswurfes von Material aus der Schweißstelle abläuft, werden die Lager hierbei nicht gefährdet.

Gleichzeitig mit den oben vorgeschlagenen Wälzlagern können auch ungeteilte Pleuelstangen auf die Zapfen aufgeschoben werden. Da die erfindungsgemäß hergestellten Kurbelwellen soweit verbessert sind, daß ihre Lebensdauer nicht mehr der begrenzende Faktor für die Dauerhaftigkeit der ganzen Maschine darstellt, kann auf die Reparierbarkeit durch Auseinandernehmen der Pleuel verzichtet werden.

Eine Anpassung zueinander gehörender Zapfenteile dient als Montagehilfe, indem sie selbsttätig und ohne aufwendiges Einrichten zu der richtigen Orientierung der Teile zueinander führt.

Werden die Lagerbuchsen vor dem Fügen unterkühlt, führt ihr anschließendes Ausdehnen beim Erwärmen auf Umgebungstemperatur zu einem besonders festen Sitz derselben auf den Zapfen.

Die aufzuweitenden Hülsen können sich in Eindrehungen (etwa in Form von im Querschnitt V-förmigen Nuten) einformen. Dabei ziehen sie sich zwangsläufig in axialer Richtung zusammen ; die so entstehende Vorspannung ist entgegengerichtet zu gegebenenfalls von außen einwirkenden Kräften, die auf ein Auseinanderziehen der gefügten Zapfenteile gerichtet sind. Der so entstehende Formschluß verleiht der Verbindung von Zapfenteilen und Hülsen eine zusätzliche Widerstandskraft.

Eine Versteifung der gesamten Konstruktion wird erzielt, wenn die offenen Enden der Hülsen nach dem Aufweiten mit Deckeln verschlossen werden. Der so entstehende Hohlraum kann auch als Schmiermittelreservoir genutzt werden.

Ausführungsbeispiele der Erfindung sind in der Zeichnung dargestellt, und zwar zeigt

| | |
|---|---|
| Figur 1 | eine drei Ausführungsformen in sich vereinigende Kurbelwelle und bruchstückhaft die damit zusammenwirkenden Teile im Längsaxialschnitt, |
| Figur 2 | weitere Ausführungsformen im Längsaxialschnitt, |
| Figur 3 | weitere Ausführungsformen im Längsaxialschnitt entsprechend der Linien III-III der Figuren 5 und 6, |
| Figur 4 | wiederum andere Ausführungsformen und die |
| Figuren 5 und 6 | Querschnitte entsprechend den Linien V-V und VI-VI der Figur 3. |

In einem angedeuteten Gehäuse 1 einer Kolbenmaschine beliebiger Art ist mittels Lagerzapfen 2 eine Kurbelwelle gelagert, die außerdem Kurbelzapfen 3 aufweist, auf denen ungeteilte Pleuelstangen 4 gelagert sind. Ermöglicht wird dies dadurch, daß jeweils eine Hälfte eines Lagerzapfens 2 und eines Kurbelzapfens 3 zusammen mit einer sie verbindenden Wange ein z.B. durch Gießen oder Schmieden hergestelltes Formstück 5 bilden. Zum Aufbau der gesamten Kurbelwelle wird die erforderliche Anzahl von Formstücken 5 dadurch miteinander verbunden, daß sie jeweils paarweise auf eine Hülse 6 geschoben werden und diese anschließend durch innere Druckaufgabe aufgeweitet wird ; dieser Prozeß wird vorzugsweise mit Hilfe einer durch eine in der Wange 28 angelegten Öffnung 29 eingeführten hydraulischen Druckvorrichtung 7 durchgeführt und solange fortgesetzt, bis die Hülse 6 durch plastische Verformung zum Anliegen an die Innenseite der in die Formstücke 5 integrierten Lagerzapfenansätze gelangt ist und diese ebenfalls, allerdings nur im elastischen Bereich, verformt hat. Durch die Rückfederungskraft der letzteren wird eine für alle Belastungsfälle ausreichend feste Verbindung geschaffen. Dabei muß die Öffnung 29 nicht notwendigerweise wie hier gezeichnet koaxial zum Zapfen 2, 3 angelegt sein. Im Interesse einer optimalen Spannungsverteilung kann auch eine exzentrische Anordnung vorteilhaft sein. Die Torsionsfestigkeit der Verbindung kann erforderlichenfalls dadurch gesteigert werden, daß zwischen Hülse und Zapfen eine Schicht 8 aus einem harten, körnigen Material, z.B. Korund, eingebracht wird, die zu einer innigeren Verzahnung der beiden Teile miteinander führt (in der Zeichnung übertrieben dick dargestellt) ; zum gleichen Zweck können die zu fügenden Teile an den zur Berührung kommenden Oberflächen mit einer Riffelung 9 oder dergleichen versehen sein. Um die Verbindung axial unter Vorspannung zu setzen, können die Formstücke 5 im Bereich der Zapfenansätze mit umlaufenden Einbuchtungen oder nicht scharfkantigen Nuten 10 versehen sein. Beim Aufweitvorgang wird das Material der Hülse 6 in diese Einbuchtungen hineingepreßt, was zum Aufbau einer in Richtung einer axialen Kontraktion wirkenden Vorspannung führt, die die Verbindung weiter festigt. Die Formstücke 5 können an den zusammenzusetzenden Flächen mit einer Schlüsselverzahnung 11 versehen werden, die sicherstellt, daß die einzelnen Formstücke 5 nur in ihrer richtigen Orientierung zueinander zusammengesetzt werden können. Die Formstücke 5 können in üblicher Weise die erforderlichen Gegengewichte 12 mit einschließen. Die Formstücke 5 sind ferner mit Schmierkanälen 13 versehen, die in umlaufenden Ringräumen 14 münden, die durch geeignete Formgebung der Hülsen 6 und der Formstücke 5 zwischen beiden entstanden sind. Erstere sind darüber hinaus mit Längsnuten 15 versehen, durch die jeweils eine Verbindung zwischen zwei aufeinanderfolgenden Ringräumen 14 hergestellt wird ; es wird so ein fortlaufender Pfad für die Schmierstoffzirkulation in der Kurbelwelle gebildet.

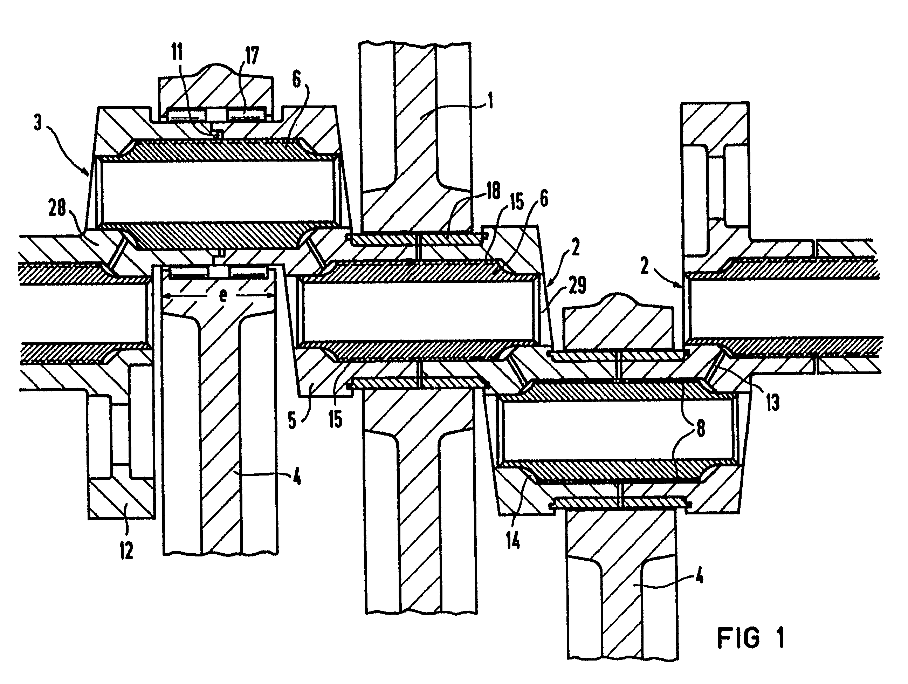

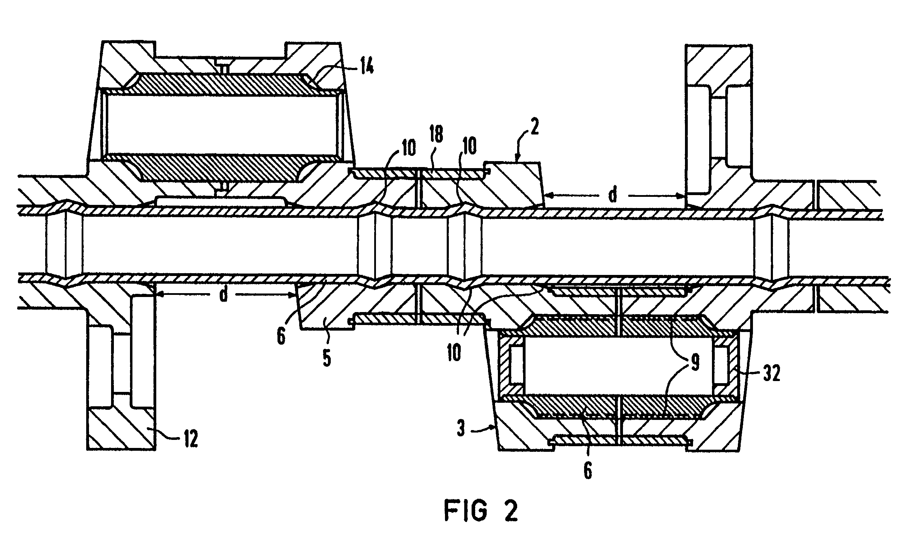

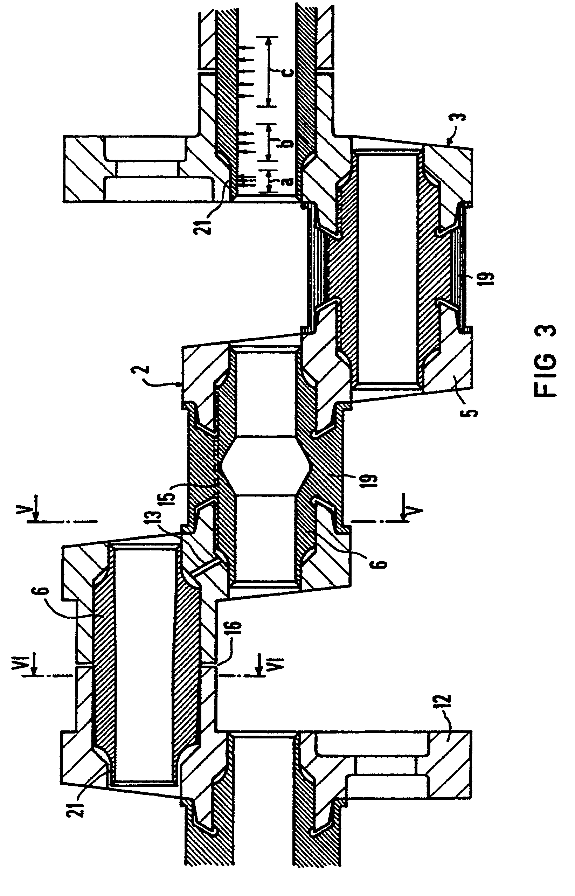

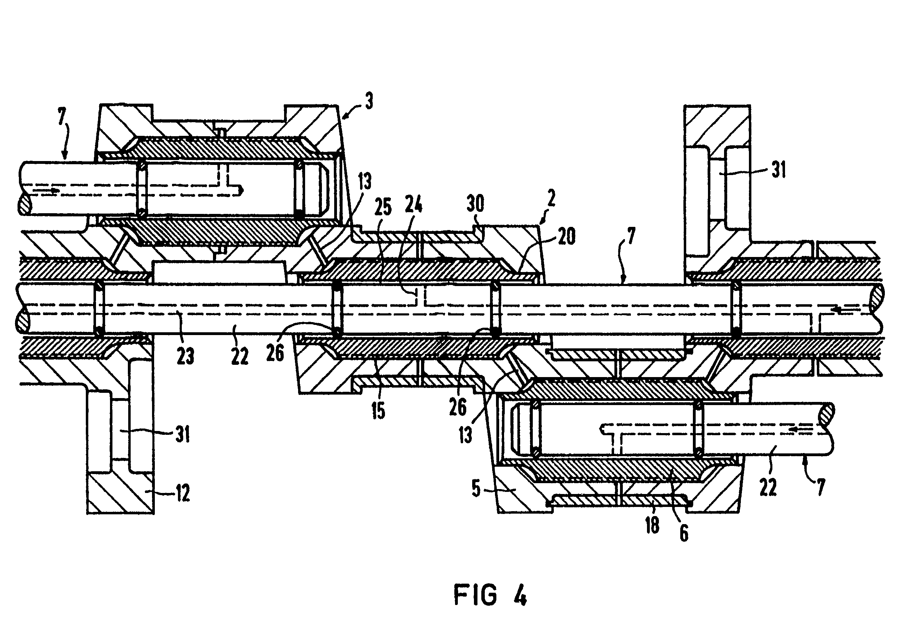

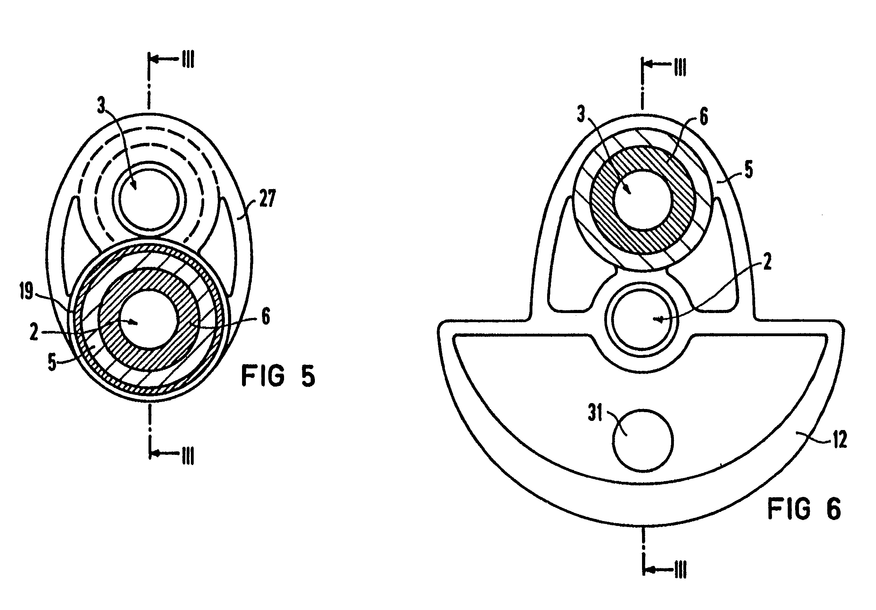

Die Schmierstoffzufuhr zu den als Gleit- oder Wälzlagern 17 ausgeführten Pleuellagern kann in bekannter Weise über radiale Schmieröffnungen 16 erfolgen. Es können aber auch besondere, ebenfalls vor dem Fügen der Teile in Position gebrachte Lagerbuchsen 18 vorgesehen werden, die aus einem Sintermaterial hergestellt sind, das durch seine Porosität für eine gleichmäßige Verteilung des Schmierstoffes sorgt und das darüber hinaus mit einem Festschmierstoff imprägniert sein kann, wodurch den Lagern gute Notlaufeigenschaften mitgeteilt werden. Außerhalb der eigentlichen, vom Lagerpartner eingenommenen Lagerfläche e können die Lagerbuchsen 18 Bunde 30 aufweisen, oder aber umgekehrt an ihren Enden eine verringerte Wandstärke (s. Fig. 4, rechts unten). Auch können so für die Formstücke 5 und die Lagerflächen jeweils die geeignetsten Werkstoffe gewählt werden, ebenso wie in einer anderen Ausführungsform, bei der zwischen die Formstücke 5 zusätzliche Zapfenteile 19 eingeschoben werden, die Bestandteil der Hülsen 6 sind und zu einer Umklammerung der Zapfenansätze genutzt werden können, wodurch die zur Verfügung stehende Anpreßfläche vergrößert wird. Die zusätzlichen Zapfenteile 19 können aber auch in ihren Werkstoffeigenschaften von den Hülsen 6 abweichen, indem letztere beispielsweise aus einem verhältnismäßig weichen, zähen Stahl hergestellt werden, an den Teile aus hartem, vom tribologischen Standpunkt aus besser geeignetem Stahlguß angegossen werden. Die Güte der durch die Aufweitung hergestellten Verbindung hängt außer von den intrinsischen Eigenschaften der beteiligten Werkstoffe auch noch von der richtigen Abstimmung des Aufweitdruckes und Fügespieles auf die Dicke der jeweils zu fügenden Teile ab. Daher kann es vorteilhaft sein, die Hülsen 6 mit einem variablen Querschnitt herzustellen, indem diese (siehe Figur 3 links oben) vor dem Aufweiten die Form eines Doppelkegelstumpfes haben und allgemein die Hülsen 6 mit dünnen Fortsätzen 21 versehen werden, da in deren Bereich nicht so sehr Festigkeitsgesichtspunkte im Vordergrund stehen, sondern eine zuverlässige Abdichtung der Ringräume 14 gegen den Verlust von Schmiermittel. Dies kann dadurch unterstützt werden, daß zwischen den Hülsenfortsätzen 21 und den benachbarten Teilen der Formstücke 5 Dichtschichten 20 aus einem duktilen Stoff z.B. aus Kupfer, angeordnet werden. Alternativ oder zusätzlich hierzu kann auch der Aufweitdruck axial variiert werden ; beispielsweise kann in dem als a bezeichneten Abschnitt (siehe Figur 3 rechts oben) der Aufweitdruck gering gehalten werden, da der entsprechende Hülsenfortsatz 21 auch unter diesen Bedingungen ausreichend verformt wird. In dem mit b bezeichneten Abschnitt dagegen kann ein sehr hoher Druck aufgebracht werden, da aus Festigkeitsgründen hier sowohl die Hülse 6 als auch das gegenüberliegende Teil des Formstückes 5 verhältnismäßig große Dicke aufweisen. In dem mit c gekennzeichneten, in der Mitte des Zapfens gelegenen Bereich dagegen genügt u.U. ein mittlerer Aufweitdruck, da hier das aufzuweitende Teil des Formstückes 5 dünner ist. Um derart gezielt unterschiedliche Aufweitungen vornehmen zu können, besteht die Aufweitungsvorrichtung 7 in vereinfachter Form dargestellt neben den hier nicht gezeigten, bekannten Einrichtungen zur Erzeugung des Drucks aus einem Sondenkörper 22, in dem mindestens eine Zuleitung 23 für das Druckfluid verläuft. Von dieser Zuleitung 23 gehen Abzweigungen 24 aus, durch die das Druckfluid in Wirkabschnitte 25 eintritt, die jeweils axial durch umlaufende Dichtungen 26 begrenzt werden. Sollen in verschiedenen Aufweitabschnitten a, b, c auch verschieden hohe Drücke aufgebracht werden, so geschieht dies über ebensoviele verschiedene Zuleitungen 23, oder aber diese werden nacheinander mit dem gleichen, über die erforderliche Strecke axial verschobenen Wirkabschnitt 25 mit wechselndem Druck bearbeitet. Wie in der Figur 4 dargestellt, kann ein Sondenkörper 22 gleichzeitig zum Ausrichten der miteinander fluchtenden Zapfen, d.h. insbesondere der Lagerzapfen 2 verwendet werden. Wenn dieser Sondenkörper mit der entsprechenden Anzahl von Wirkabschnitten 25 versehen ist, können für sämtliche Lagerzapfen 2 die Hülsen 6 und Formstücke 5 in einem Arbeitsgang gefügt werden. Zur Aufweitung der Kurbelzapfen 3 sind dann weitere Sondenkörper 22 erforderlich, bzw. kann hier die Aufweitung erst in weiteren Arbeitsgängen stattfinden. Eine Alternativmöglichkeit zeigt die Figur 2, bei der für die Lagerzapfen 2 eine einzige durchlaufende Hülse 6 verwendet wird, die ebenfalls in ihren verschiedenen Abschnitten in einem Arbeitsgang aufgeweitet wird und die gleichfalls eine einwandfreie Ausrichtung der Lagerzapfen 2 gewährleistet. Anschließend werden die Abschnitte d der Hülse herausgetrennt, um für die Pleuelstangen 4 Raum zu schaffen. In ähnlicher Weise können auch miteinander fluchtende Kurbelzapfen 3 in einem Arbeitsgang befestigt werden, da in den Gegengewichten 12 angelegte Durchstecköffnungen 31 ein Aufreihen aller zugehörigen Hülsen 6 auf eine hydraulische Druckvorrichtung 7 gestatten. Die Formstücke 5 können wie aus der Figur 5 ersichtlich, mit Bügeln 27 versehen sein, durch die eine weitere Versteifung der Konstruktion erreicht wird. Da die in den Formstücken 5 zum Einführen der Sonden 22 belassenen Öffnungen nur verhältnismäßig klein zu sein brauchen, können die Lager- 2 und Kurbelzapfen 3 einander in der axialen Projektion gesehen überdecken, wie es für Kurbelwellen erforderlich ist, die in neuzeitlichen Kurzhubmotoren Verwendung finden sollen. Bei dem in der Fig. 2 rechts unten dargestellten Kurbelzapfen 3 sind die Enden der aufgeweiteten Hülse 6 mit z.B. eingepreßten Deckeln 32 verschlossen worden, die nicht nur eine Versteifung der gesamten Konstruktion bewirken, sondern auch die Möglichkeit schaffen, den dann abgeschlossenen Hohlraum im Inneren der Hülse 6 als Schmiermittelreservoir, z.B. für die Lagerbuchsen 18, zu benutzen.

## Patentansprüche

1. Verfahren zur Herstellung von Kurbelwellen für Kolbenmaschinen (1) aus Formstücken (5), die jeweils eine Kurbelwange (28) und einen Teil eines Zapfens (2, 3) umfassen, bei dem die Zapfenteile (2, 3) jeweils benachbarter Formstücke (5) auf eine gemeinsame Hülse (6) geschoben werden und die Hülsen (6) so aufgeweitet werden, daß die Zapfenteile (2, 3) dadurch radial elastisch verformt bleiben, dadurch gekennzeichnet, daß die Hülsen (6) durch plastische radiale Verformung mittels innerer Druckaufgabe zum Anliegen an die Innenseite der Zapfenteile (2, 3) gelangen und darüberhinaus aufgeweitet werden, worauf nach Druckentlastung die Zapfenteile (2, 3) nach einem elastischen Rückfedern eine feste Verbindung mit den Hülsen (6) schaffen.

2. Verfahren nach Anspruch 1, dadurch gekennzeichnet,
daß die Lagerzapfenteile (2) auf eine durchgehende, allen gemeinsame Hülse (6) geschoben werden und diese nach dem Befestigen der Formstücke (5) auf ihr in einem Bereich (d) für den Durchtritt der Pleuelstangen (4) abgetrennt wird.

3. Verfahren nach Anspruch 1 der 2, dadurch gekennzeichnet,
daß Lagerzapfen (2) und Kurbelzapfen (3) mittels je einer einzigen, durchgehenden Aufweitvorrichtung (7) in einem Arbeitsgang auf den Hülsen (6) befestigt werden.

4. Verfahren nach Anspruch 1, dadurch gekennzeichnet,
daß die Hülsen (6) in axial getrennten Bereichen (a, b, c) mit unterschiedlichem Druck beaufschlagt werden derart, daß der höchste Druck in dem Bereich (b) aufgebracht wird, der demjenigen Bereich der Zapfen (2, 3, 19) mit der größten Materialstärke gegenüberliegt.

5. Verfahren nach Anspruch 1, dadurch gekennzeichnet,
daß auf die Zapfen (2, 3, 19) vor dem Fügen hohlzylindrische Lagerbuchsen (18) aufgebracht werden.

6. Verfahren nach Anspruch 5, dadurch gekennzeichnet,
daß nur Teile der Lagerbuchsen (18) mit den Zapfen (2, 3, 19) verformt werden, die außerhalb der Lagerfläche liegen.

7. Verfahren nach Anspruch 1 oder 5, dadurch gekennzeichnet,
daß auf die Zapfen (2, 3, 19) bzw. Lagerbuchsen (18) vor dem Fügen Gleitoder Wälzlager (17) aufgebracht werden.

8. Verfahren nach Anspruch 1 oder 7, dadurch gekennzeichnet,
daß auf die Zapfen (2, 3, 19) bzw. Lagerbuchsen (18) bzw. die Gleitoder Wälzlager (17) vor dem Fügen ungeteilte Pleuelstangen (4) aufgebracht werden.

9. Verfahren nach Anspruch 5, dadurch gekennzeichnet,
daß die Lagerbuchsen (18) für die Dauer des Fügens der Zapfenteile (2, 3, 19) und Hülsen (6) unterkühlt werden.

10. Aufgebaute Kurbelwelle bestehend aus Formstücken (5) die jeweils eine Kurbelwange (28) und zumindest einen anschließenden Hohlzapfen als Abschnitte eines Grund- oder Hubzapfens (2, 3) umfassen, bei der zugeordnete Abschnitte eines Grund- oder Hubzapfens (2, 3) jeweils auf eine gemeinsame Hülse (6) aufgeschoben sind und bei der die Hülsen (6) in situ aufgeweitet sind und in den Abschnitten der Zapfen (2, 3) unter elastischer Vorspannung in denselben kraftschlüssig festgelegt sind, dadurch gekennzeichnet,
daß die Hülsen (6) mittels innerer Druckaufgabe plastisch radial verformt sind und die Zapfenteile (2, 3) nach Druckentlastung mit den Hülsen (6) elastisch rückgefedert sind.

11. Welle nach Anspruch 10, dadurch gekennzeichnet,
daß Formstücke (5) verwendet werden, die in den Wangen (28) Öffnungen (29) mit einem Durchmesser aufweisen, der dem Innendurchmesser der Hülsen (6) mindestens gleich ist.

12. Welle nach Anspruch 10 oder 11, dadurch gekennzeichnet,
daß zwischen die Zapfenteile (2, 3), die Bestandteil der Formstücke (5) sind, zusätzliche Zapfenteile (19) eingeschoben werden.

13. Welle nach Anspruch 12, dadurch gekennzeichnet,
daß die zusätzlichen Zapfenteile (19) Bestandteil der Hülsen (6) sind.

14. Welle nach Anspruch 12 oder 13, dadurch gekennzeichnet,
daß die zusätzlichen Zapfenteile (19) andere Werkstoffeigenschaften aufweisen als der übrige Teil der Hülsen (6).

15. Welle nach einem der Ansprüche 10 bis 14, dadurch gekennzeichnet,
daß Hülsen (6) mit nach den Enden sich verjüngendem Querschnitt verwendet werden.

16. Welle nach einem der Ansprüche 10 bis 15, dadurch gekennzeichnet,
daß Zapfenteile (2, 3) und an ihrer Außenoberfläche mit Längsnuten (15) versehene Hülsen (6) so geformt werden, daß nach dem Aufweiten derselben an den Enden der Hülsen leere Ringräume (14) verbleiben, in die die Wangen (28) durchquerende Kanäle (13) münden.

17. Welle nach einem der Ansprüche 10 bis 16, dadurch gekennzeichnet,
daß Lagerbuchsen (18) verwendet werden, die axial außerhalb der Lagerfläche (e) mit Bunden (30) versehen werden.

18. Welle nach einem der Ansprüche 10 bis 17, dadurch gekennzeichnet,
daß Lagerbuchsen (18) verwendet werden, die axial außerhalb der Lagerfläche (e) eine verringerte Wandstärke aufweisen.

19. Welle nach einem der Ansprüche 10 bis 18, dadurch gekennzeichnet,
daß die Zapfenteile (2, 3, 19) mit aufeinander abgestimmten Schlüsselverzahnungen (11) versehen sind, die eine bestimmte Orientierung der Teile zueinander vorgeben.

20. Welle nach einem der Ansprüche 10 bis 19, dadurch gekennzeichnet,
daß die Zapfenteile (2, 3, 19) an ihrer Innenseite mit radialen Erweiterungen versehen sind.

21. Welle nach einem der Ansprüche 10 bis 20, dadurch gekennzeichnet,
daß die aufgeweiteten Hülsen (6) an ihren Enden mit aussteifenden Deckeln (32) verschlossen sind.

22. Welle nach einem der Ansprüche 10 bis 21, dadurch gekennzeichnet,
daß die Hülsen (6) über die Zapfenabschnitte greifende äußere Lagerbereiche aufweisen.

## Claims

1. Method for making crankshafts for piston engines from formed pieces (5), which comprise respectively a crank web (28) and one part of a pin (2, 3), with which the pin parts (2, 3) of adjacent formed pieces (5) are pushed on to a common sleeve (6) and the sleeves (6) are expanded such that the pin parts (2, 3) remain elastically deformed radially through this,
characterised in that the sleeves (6) are brought to lie against the inside of the pin parts (2, 3) through plastic radial deformation with the help of pressure applied internally, and are furthermore expanded, after which when the pressure has been relieved, the pin parts (2, 3), after springing back resiliently, make a firm union with the sleeves (6).

2. Method as claimed in Claim 1,
characterised in that the bearing trunnion parts (2) are pushed on to a through-going sleeve (6) which is common to all, and said sleeve (6), after the formed pieces (5) have been fixed on to it in an area (d) which is for the connecting rods (4) to pass through, is separated off.

3. Method as claimed in Claim 1 or 2,
characterised in that bearing trunnions (2) and crank pins (3) are fixed on the sleeves (6) in one working operation by means of one single, continuous expanding device (7).

4. Method as claimed in Claim 1,
characterised in that the sleeves are acted upon in axially separated areas (a, b, c) with differing pressure, such that the highest pressure is applied in the area (b) which is opposite to the area of the pins (2, 3, 19) with the greatest material thickness.

5. Method as claimed in Claim 1,
characterised in that hollow cylindrical bearing bushes (18) are mounted on the pins (2, 3, 19) before the joining operation.

6. Method as claimed in Claim 5,
characterised in that only parts of the bearing bushes (18) which lie outside the bearing surface are deformed with the pins (2, 3, 19).

7. Method as claimed in Claim 1 or 5,
characterised in that before the joining operation, plain or roller bearings (17) are mounted on the pins (2, 3, 19) or bearing bushes (18).

8. Method as claimed in Claim 1 or 7
characterised in that before the joining operation, undivided connecting rods (4) are fitted on to the pins (2, 3, 19) or bearing bushes (18) or the plain or roller bearings (17).

9. Method as claimed in Claim 5,
characterised in that for the duration of joining of the pin parts (2, 3, 19) and sleeves (6), the bearing bushes (18) are supercooled.

10. Crankshaft made up of several parts, comprising formed pieces (5) which comprise a crank web (28) and at least one attached hollow pin as sections of a basic or crank pin (2, 3), on which assigned sections of a basic or crank pin (2, 3) are pushed on to a common sleeve (6) and on which the sleeves (6) are expanded in situ and are fixed in a force-locking manner in the sections of the pins (2, 3) under elastic pretension in the same,
characterised in that the sleeves (6) are radially deformed in a plastic manner by means of pressure applied internally and the pin parts (2, 3) spring back resiliently with the sleeves (6) after the pressure has been relieved.

11. Shaft as claimed in Claim 10,
characterised in that formed pieces (5) are used which, in the webs (28), have openings (29) with a diameter which is at least the same as the inside diameter of the sleeves (6).

12. Shaft as claimed in Claim 10 or 11,
characterised in that additional pin parts (19) are pushed in between the pin parts (2, 3) which are a component part of the formed pieces (5).

13. Shaft as claimed in Claim 12,
characterised in that the additional pin parts (19) are a component part of the sleeves (6).

14. Shaft as claimed in Claim 12 or 13,
characterised in that the additional pin parts (19) have other material properties than the remaining part of the sleeves (6).

15. Shaft as claimed in one of the Claims 10 to 14,
characterised in that sleeves (6) with a tapering cross section towards the ends are used.

16. Shaft as claimed in one of the Claims 10 to 15,
characterised in that pin parts (2, 3) and sleeves (6) which have longitudinal grooves (15) on their external surface, are shaped such that after they have been expanded, empty annular chambers remain at the ends of the sleeves, into which channels (13) which pass through the webs (28) open.

17. Shaft as claimed in one of the Claims 10 to 16,
characterised in that bearing bushes are used which are provided with collars (30) axially outside the bearing surface area (e).

18. Shaft as claimed in one of the Claims 10 to 17,
characterised in that bearing bushes (18) are used which have a reduced wall thickness axially outside the bearing surface area (e).

19. Shaft as claimed in one of the Claims 10 to 18,
characterised in that the pin parts (2, 3, 19) are provided with key serrations (11) matched to one another, which give a certain orientation of the parts in relation to one another.

20. Shaft as claimed in one of the Claims 10 to 19,
characterised in that the pin parts (2, 3, 19) are provided on their inside with radial extensions.

21. Shaft as claimed in one of the Claims 10 to 20,
characterised in that the expanded sleeves (6) are closed at their ends with reinforcing covers (32).

22. Shaft as claimed in one of the claims 10 to 21,
characterised in that the sleeves (6) have external bearing areas which grip via the pin sections.


**Revendications**

1. Procédé de fabrication de vilebrequins pour machines à pistons (1), à partir de pièces façonnées (5) qui comportent chacune un flasque ou bras (28) et une partie d'un tourillon (2, 3), procédé dans lequel les parties de tourillon (2, 3) de pièces façonnées (5) voisines sont à chaque fois emboîtées sur une douille commune (6) et les douilles (6) sont dilatées de manière que les parties de tourillon (2, 3) restent ainsi déformées radialement, élastiquement,
caractérisé par le fait que, au moyen d'une application intérieure de pression, les douilles (6) viennent, par déformation radiale plastique, au contact du côté intérieur des parties de tourillon (2, 3) et sont dilatées au-delà, ce qui a pour effet qu'après la suppression de la pression les parties de tourillon (2, 3) créent, après un rappel élastique, un assemblage solide avec les douilles (6).

2. Procédé selon revendication 1,
caractérisé par le fait que les parties de tourillon de palier (2) sont emboîtées sur une douille continue et commune (6), laquelle, après que les pièces façonnées (5) ont été fixées sur elle, est coupée-enlevée dans une région (d) pour le passage des bielles (4).

3. Procédé selon revendication 1 ou 2,
caractérisé par le fait que les tourillons de palier (2) et les tourillons de maneton (3) sont fixés en une seule opération sur les douilles (6), à chaque fois au moyen d'un seul dispositif dilatateur (7) ininterrompu.

4. Procédé selon revendication 1,
caractérisé par le fait que les douilles (6) sont sollicitées par des pressions différentes dans des régions axialement séparées (a, b, c), de manière telle que la plus haute pression soit appliquée dans la région (b) se trouvant en vis-à-vis de la région des tourillons (2, 3, 19) où l'épaisseur de matière est la plus forte.

5. Procédé selon revendication 1,
caractérisé par le fait que des manchons ou coussinets cylindriques creux (18) sont montés sur les tourillons (2, 3, 19) avant l'assemblage.

6. Procédé selon revendication 5,
caractérisé par le fait que ne sont déformées avec les tourillons (2, 3, 19) que des parties des douilles de palier (18) se trouvant en dehors de la surface de palier.

7. Procédé selon revendication 1 ou 5,
caractérisé par le fait que des paliers lisses ou des roulements (17) sont montés sur les tourillons (2, 3, 19) ou, selon le cas, sur les douilles de palier (18), avant l'assemblage.

8. Procédé selon revendication 1 ou 7,
caractérisé par le fait que des bielles non partagées (4) sont montées, avant l'assemblage, sur les tourillons (2, 3, 19) ou selon le cas sur les douilles de palier (18) ou encore sur les paliers lisses ou sur les roulements (17).

9. Procédé selon revendication 5,
caractérisé par le fait que les manchons (18) sont refroidis pendant la durée de l'assemblage des parties de tourillon (2, 3, 19) et des douilles (6).

10. Vilebrequin assemblé, constitué par des pièces façonnées (5) qui comportent chacune un flasque ou bras (28) et, s'y rattachant, au moins un tourillon creux en tant que portions d'un tourillon de palier ou d'un tourillon de maneton (2, 3), les portions conjuguées d'un tourillon de palier ou de maneton (2, 3) étant à chaque fois emboîtées sur une douille commune (6), et les douilles (6) étant dilatées in situ et immobilisées par serrage dans les portions des tourillons (2, 3), sous précontrainte élastique,
caractérisé par le fait que les douilles (6) sont déformées plastiquement, radialement, au moyen d'une application de pression intérieure, et les parties de tourillon (2, 3) sont rappelées élastiquement avec les douilles (6) après suppression de la pression.

11. Vilebrequin selon revendication 10,
caractérisé par le fait que l'on utilise des pièces façonnées (5) qui présentent, dans les flasques ou bras (28), des ouvertures (29) ayant un diamètre au moins égal au diamètre intérieur des douilles (6).

12. Vilebrequin selon revendication 10 ou 11,
caractérisé par le fait que des parties de tourillon supplémentaires (19) sont introduites entre les parties de tourillon (2, 3) qui font partie des pièces façonnées (5).

13. Vilebrequin selon revendication 12,
caractérisé par le fait que les parties de tourillon supplémentaires (19) font partie des douilles (6).

14. Vilebrequin selon revendication 12 ou 13,
caractérisé par le fait que les parties de tourillon supplémentaires (19) présentent des caractéristiques de matière autres que la partie restante des douilles (6).

15. Arbre selon l'une des revendications 10 à 14,
caractérisé par le fait que l'on utilise des douilles (6) ayant une section droite s'amincissant vers les extrémités.

16. Vilebrequin selon l'une des revendications 10 à 15,
caractérisé par le fait que des parties de tourillon (2, 3) et des douilles (6) dont la surface extérieure est munie de rainures longitudinales (15) sont façonnées de manière telle qu'après dilatation de celles-ci des espaces annulaires vides (14) subsistent aux extrémités des douilles, les canaux (13) traversant les flasques ou bras (28) débouchant dans ces espaces annulaires.

17. Vilebrequin selon l'une des revendications 10 à 16,
caractérisé par le fait que l'on utilise des manchons (18) munis de collets (30) axialement situés en dehors de la ou les surface(s) de portée de palier.

18. Vilebrequin selon l'une des revendications 10 à 17,
caractérisé par le fait que l'on utilise des manchons (18) qui, axialement en dehors de la ou les surface(s) de portée de palier, présentent une épaisseur réduite.

19. Vilebrequin selon l'une des revendications 10 à 18,
caractérisé par le fait que les parties de tourillon (2, 3, 19) sont munies de dentures d'arrêt-positionnement (11) mutuellement harmonisées, qui imposent une orientation mutuelle déterminée des parties.

20. Vilebrequin selon l'une des revendications 10 à 19,
caractérisé par le fait que les parties de tourillon (2, 3, 19) sont munies d'élargissements radiaux en leur côté intérieur.

21. Vilebrequin selon l'une des revendications 10 à 20,
caractérisé par le fait que les douilles dilatées (6) ont leurs extrémités fermées par des couvercles (32) fournissant de la rigidité.

22. Vilebrequin selon l'une des revendications 10 à 21,
caractérisé par le fait que les douilles (6) présentent des zones de portée extérieures débordant par-dessus les portions de tourillon.

FIG 1

FIG 2

FIG 3

FIG 4

EP 0 315 136 B1

FIG 6

FIG 5